Europäisches Patentamt

European Patent Office

Office européen des brevets

(19)

(11) Veröffentlichungsnummer: **0 100 504**

**A2**

## (12) EUROPÄISCHE PATENTANMELDUNG

(21) Anmeldenummer: **83107259.0**

(22) Anmeldetag: **24.07.83**

(51) Int. Cl.³: **G 09 G 1/00**

(30) Priorität: **26.07.82 DE 3227850**

(43) Veröffentlichungstag der Anmeldung:
**15.02.84  Patentblatt  84/7**

(84) Benannte Vertragsstaaten:
**AT BE CH DE FR GB IT LI LU NL SE**

(71) Anmelder: **Nixdorf Computer Aktiengesellschaft**
**Fürstenallee 7**
**D-4790 Paderborn(DE)**

(72) Erfinder: **Nüsse, Theo, Ing. grad.**
**Habichtsweg 6**
**D-3533 Willebadessen(DE)**

(74) Vertreter: **Schaumburg, Karl-Heinz**
**Patentanwälte Schaumburg & Dr. Thoenes**
**Mauerkircherstrasse 31 Postfach 86 07 48**
**D-8000 München 86(DE)**

(54) **Bildwiedergabegerät.**

(57) Bei einem Bildwiedergabegerät mit in Abhängigkeit von einem Bildsynchronsignal (BSN) erfolgender elektromagnetischer Strahlablenkung der Bildröhre (10) und mit einem Lüfter (20) ist dessen Motor (18) zur Vermeidung von Bildstörungen durch magnetische Streuflüsse als Phasenschieber-Asynchronmotor ausgebildet, bei dem die Stromspeisung in einer in Abhängigkeit vom Bildsynchronsignal (BSN) gesteuerten Brückenschaltung (50) derart erfolgt, daß das Drehfeld des Motors (18) synchron zu dem Bildsynchronsignal (BSN) läuft.

EP 0 100 504 A2

Bildwiedergabegerät

Die Erfindung bezieht sich auf ein Bildwiedergabegerät
nach dem Oberbegriff des Anspruchs 1.

Bei einem bekannten derartigen Bildwiedergabegerät
wird der zur Abführung der elektrischen Verlustleistung
vorgesehene Lüfter von einem aus dem Wechselstromnetz
gespeisten Spaltpolmotor angetrieben. Ein solcher Spaltpolmotor erzeugt ein relativ starkes magnetisches
Streufeld, das die Strahlablenkung der Bildröhre beeinflussen kann, so daß Bildfehler entstehen. Solche Fehler treten besonders dann auf, wenn die Bildwiederholfrequenz der Bildröhre mit der nominellen Netzfrequenz
übereinstimmt und die Netzfrequenz schwankt, wie dies
beispielsweise in Inselnetzen oder privaten Netzen der
Fall sein kann. Die Bildwiederholfrequenz wird nämlich
durch die Folgefrequenz von im Bildsynchronsignal enthaltenen Bildsynchronimpulsen erzeugt und ist sehr
genau konstant, da das Bildsynchronsignal beispielsweise mittels eines quarzgesteuerten Impulsgebers erzeugt wird, so daß sich Frequenz- und Phasenabweichungen zwischen dem Bildsynchronsignal und der Netzspann-
nung ergeben. Diese Abweichungen führen zu einem Wackeln
des Bildes. Eine Abschirmung des Magnetfeldes eines
Spaltpolmotors wäre nur mit unverhältnismäßig großem
Bauaufwand möglich. Durch einen Ersatz des Spaltpolmotors
durch einen wechselstromgespeisten Motor anderer Bauart

-2-

sind die genannten Nachteile nicht zu beseitigen, während im allgemeinen der Bauaufwand wesentlich erhöht wird. Ein Ersatz des Spaltpolmotors durch einen Kommutator-Gleichstrommotor kommt gleichfalls nicht in Frage, da dieser starke elektromagnetische Störfelder erzeugt.

Der Erfindung liegt die Aufgabe zugrunde, ein Bildwiedergabegerät der eingangs genannten Art mit geringem konstruktiven Aufwand dahingehend weiterzubilden, daß Bildstörungen durch den Motor des Ventilators ausgeschlossen sind. Diese Aufgabe wird gemäß der Erfindung dadurch gelöst, daß das Bildwiedergabegerät der eingangs genannten Art mit dem in Anspruch 1 angegebenen kennzeichnenden Merkmalen ausgebildet ist.

Durch die Synchronisation des Drehfeldes des Motors mit dem Bildsynchronsignal und damit mit der Bildwiederholung der Bildröhre wird erreicht, daß ein von dem Motor erzeugtes Streufeld keine Frequenz- und Phasenabweichungen gegenüber der Bildwiederholfrequenz mehr aufweist, so daß die Beeinflussung der Strahlablenkung der Bildröhre konstant bleibt. Es kann so nicht zu Bildstörungen kommen. Etwaige verbleibende konstante Beeinflussungen der Strahlablenkung bei der Bildwiederholung können durch geeignete Einstellung von deren Steuerschaltung völlig ausgeglichen werden.

Ausgestaltungen der Erfindung sind in den Unteransprüchen angegeben.

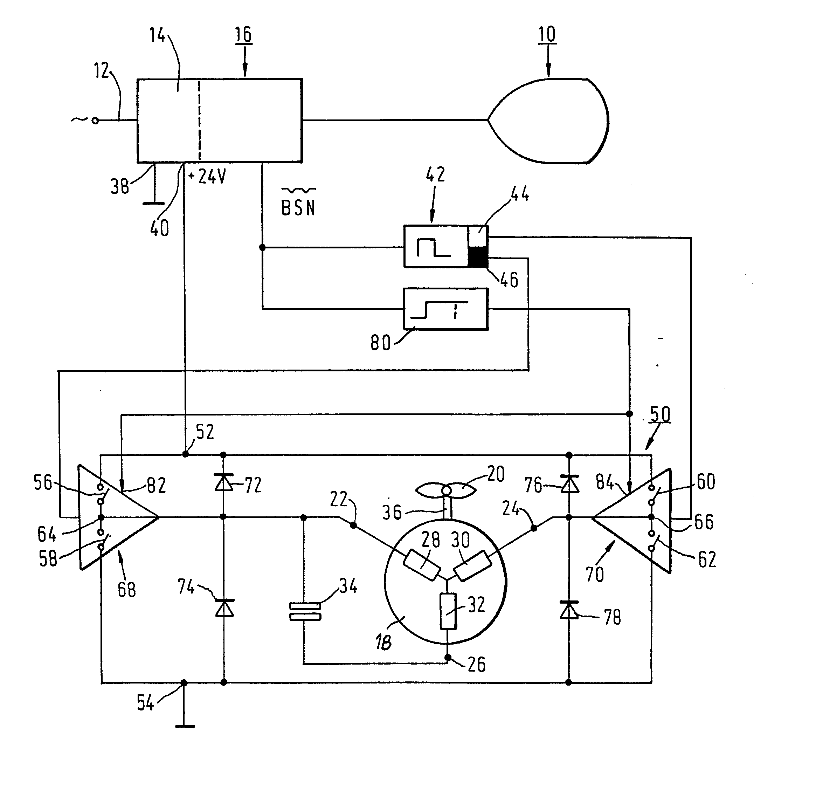

Die Erfindung wird im folgenden anhand der Zeichnung näher erläutert, in der ein Bildwiedergabegerät unter

-3-

weitgehender Weglassung seiner mechanischen Teile und teilweise in Blockdarstellung gezeigt ist.

Das dargestellte Bildwiedergabegerät umfaßt eine in einem nicht dargestellten Gehäuse angeordnete Bildröhre 10 mit elektromagnetischer Strahlablenkung, eine aus einem Wechselstromnetz über einen Wechselstromanschluß 12 gespeiste und einen Gleichrichterteil 14 enthaltende Steuerschaltung 16, die ein Bildsynchronsignal BSN mit einer der nominellen Netzfrequenz gleichenden, jedoch quarzstabilisierten Bildwiederholfrequenz erzeugt, und einen in dem Gehäuse angeordneten, von einem elektrischen Motor 18 angetriebenen Lüfter 20. Der Motor 18 ist ein Drehfeldmotor, dessen Drehfeld in noch zu beschreibender Weise synchron zu dem Bildsynchronsignal BSN laufend in Abhängigkeit von diesem erzeugt wird.

Beim Ausführungsbeispiel ist der Motor 18 ein Phasenschieber-Asynchronmotor mit drei in Sternschaltung zwischen die Feldspulenanschlüsse 22, 24, 26 geschalteten Feldspulen 28, 30, 32, wobei der Feldspulenanschluß 26 mit einem einzigen anderen Feldspulenanschluß, nämlich dem Feldspulenanschluß 22, über einen eine Phasenverschiebung bewirkenden Kondensator 34 verbunden ist. Zweckmäßig weist der Motor 18 einen nicht näher dargestellten Außenläufer auf, mit dem der Lüfter 20 über eine Welle 36 verbunden ist. Der Außenläufer wirkt als magnetische Abschirmung, wodurch magnetische Streufelder verringert werden.

Die Feldspulen 28, 30 des Motors 18 werden periodisch und mit einer geeigneten Phasenverschiebung impulsweise aus einer Gleichspannungsquelle gespeist. Als

-4-

solche dient der ohnehin in der Steuerschaltung 16 vorgesehene Gleichrichterteil 14, der zur Speisung des Motors 18 zwischen seinen Ausgangsanschlüssen 38, 40 eine Gleichspannung von im Ausführungsbeispiel 24 V abgibt. Der Ausgangsanschluß 38 liegt an Masse.

Zweckmäßig ist zur Steuerung der Stromzufuhr zu den Feldspulen 28, 30 des Motors 18 mindestens ein von dem Bildsynchronsignal BSN beaufschlagter Impulsgeber vorgesehen, der jeweils beim Auftreten eines Bildsynchronimpulses im Bildsynchronsignal unverzögert einen ersten Steuerimpuls und gegenüber dem Auftreten des Bildsynchronimpulses verzögert einen zweiten Steuerimpuls erzeugt, in Abhängigkeit von denen geeignete, die Stromzufuhr bewirkende Schaltelemente gesteuert sind. Die Erzeugung der genannten Steuerimpulse kann dadurch erleichtert werden, daß der erste und der zweite Steuerimpuls jeweils eine der Hälfte der Folgedauer der Bildsynchronimpulse gleiche Impulsdauer aufweisen und daß der zweite Steuerimpuls zeitlich unmittelbar auf den ersten Steuerimpuls folgt. Hierzu kann dann nämlich beispielsweise wie beim Ausführungsbeispiel ein einziger Impulsgeber 42 vorgesehen sein, der zwei antivalente Ausgänge 44, 46 aufweist und der im Ausgangssignal des einen Ausgangs 44 den ersten Steuerimpuls und im Ausgangssignal des zweiten Ausgangs 46 den zweiten Steuerimpuls erzeugt. Zweckmäßig ist dieser Impulsgeber als monostabiles Kippglied ausgebildet, das jeweils beim Auftreten eines Bildsynchronimpulses im Bildsynchronsignal BSN gekippt wird und nach der halben Folgedauer der Bildsynchronimpulse zurückkippt.

Als Speiseschaltung für den Motor 18, die die von dem Impulsgeber 42 gesteuerten Schaltelemente für die

-5-

Stromzuführung enthält, ist eine Brückenschaltung 50 vorgesehen, deren einer Speisediagonalenanschluß 52 mit dem positiven Anschluß 40 des Gleichrichterteils 14 verbunden ist und deren anderer Speisediagonalen- anschluß 54 an Masse liegt. Vier Brückenzweige werden von jeweils einem Schaltglied 56, 58, 60, 62 gebildet. Zwischen den in Reihe miteinander zwischen den Speisediagonalenanschlüssen 52, 54 liegenden Schaltgliedern 56, 58 liegt ein erster Diagonalenanschluß 64. Zwischen den ebenfalls in Reihe miteinander zwischen den Speiseanschlüssen 52, 54 liegenden Schaltgliedern 60, 62 liegt ein zweiter Diagonalenanschluß 66. Mit dem Diagonalenanschluß 64 ist der Feldspulenanschluß 22, mit dem Diagonalenanschluß 66 der Feldspulenanschluß 24 des Motors 18 verbunden.

Die Schaltglieder 56, 58 sind Transistoren eines Treiberverstärkers 68, dessen Ausgang mit dem ersten Diagonalenanschluß 64 identisch ist und dessen Eingang mit dem Ausgang 46 des Impulsgebers 42 verbunden ist und somit jeweils mit dem zweiten Steuerimpuls beaufschlagt wird. Beim Vorliegen des zweiten Steuerimpulses ist das Schaltglied 56 leitend und das Schaltglied 58 nichtleitend, so daß der Feldspulenanschluß 22 über den Speiseanschluß 52 an der positiven Gleichspannung liegt. Bei Nichtvorliegen des zweiten Steuerimpulses ist das Schaltglied 56 nichtleitend und das Schaltglied 58 leitend, so daß der Feldspulenanschluß 22 über den Speiseanschluß 54 an Masse liegt. Die Schaltglieder 60, 62 sind von Transistoren eines weiteren, gegenüber dem Treiberverstärker 68 gleichartigen Treiberverstärkers 70 gebildet, dessen Ausgang mit dem zweiten Diagonalenanschluß 66 identisch ist und dessen

-6-

Eingang mit dem Ausgang 44 des Impulsgebers 42 verbunden ist, so daß er jeweils mit dem ersten Steuerimpuls beaufschlagt wird. Beim Vorliegen des ersten Steuerimpulses ist das Schaltglied 60 leitend und das Schaltglied 62 nichtleitend, so daß der Feldspulenanschluß 24 über den Speiseanschluß 52 an der Gleichspannung liegt, während bei Nichtvorliegen des ersten Steuerimpulses das Schaltglied 60 nichtleitend und das Schaltglied 62 leitend ist, so daß der Feldspulenanschluß 24 an Masse liegt. Wegen der Antivalenz der von den Ausgängen 44, 46 des Impulsgebers 42 abgegebenen Steuerimpulse sind also abwechselnd jeweils während der Folgezeit zweier aufeinanderfolgender Bildsynchronimpulse des Bildsynchronsignals BSN während der ersten Hälfte der Folgezeit die Schaltglieder 58, 60 leitend und die Schaltglieder 56, 62 nichtleitend, sowie während der zweiten Hälfte der Folgezeit die Schaltglieder 56, 62 leitend und die Schaltglieder 58, 60 nichtleitend.

Parallel zu jedem Schaltglied 56, 58, 60, 62 ist eine bezüglich der Gleichspannung des Gleichrichterteils 14 in Sperr-Richtung gepolte Diode 72, 74, 76, 78 geschaltet. Hierdurch wird die in den Feldspulen 28, 30, 32 gespeicherte Energie periodisch wieder zum Gleichrichterteil 14 zurückgeführt. Da ein Drehfeldmotor ohnehin mit günstigerem Wirkungsgrad als ein Spaltpolmotor arbeiten kann, wird so insgesamt gegenüber einem herkömmlichen Spaltpolmotor selbst unter Berücksichtigung der Verluste im Gleichrichterteil 14 ein hinsichtlich des Wirkungsgrades wesentlich günstigerer Antrieb des Lüfters 20 erhalten.

Damit bei einem etwaigen Ausfall des Bildsynchronsignals BSN die Feldspulen 28, 30 des Motors 18 nicht von einem Gleichstrom durchflossen werden, der einen unnötigen Leistungsverlust bedeuten würde und den Motor 18 schädigen könnte, ist zweckmäßig vorgesehen, daß die Stromzufuhr zu den Feldspulenanschlüssen 22, 24 des Motors 18 in Abhängigkeit davon abschaltbar ist, daß im Bildsynchronsignal BSN während einer vorgegebenen, die Folgedauer der darin im ungestörten Betrieb auftretenden Bildsynchronimpulse übersteigenden Dauer kein Bildsynchronimpuls auftritt. Dies wird bei dem Ausführungsbeispiel dadurch erreicht, daß ein wiedertriggerbares, monostabiles Kippglied 80 von dem Bildsynchronsignal BSN beaufschlagt ist, beim Fortfall von dessen Ausgangssignal die Stromzufuhr unterbrochen wird. Bei ungestörtem Bildsynchronsignal BSN wird das bei Betriebsbeginn gekippte oder getriggerte Kippglied 80 mit jedem Bildsynchronimpuls erneut getriggert, so daß es ständig seinen gekippten Zustand beibehält und ein entsprechendes Ausgangssignal erzeugt. Bleiben dagegen die Bildsynchronimpulse aus, so kippt das Kippglied 80 nach Ablauf seiner gegenüber der Folgedauer der Bildsynchronimpulse etwas größeren Kippdauer wieder zurück, so daß sein Ausgangssignal fortfällt. Das Ausgangssignal des Kippgliedes 80 wird dadurch berücksichtigt, daß mit ihm an den Treiberverstärkern 68, 70 vorgesehene Freigabeeingänge 82, 84 beaufschlagt werden. Nur beim Vorliegen des Ausgangssignales des Kippgliedes 80 an den Freigabeeingängen 82, 84 arbeiten die Treiberverstärker 68, 70 in der oben beschriebenen Weise. Bei Fortfall des Ausgangssignals des Kippgliedes 80 bleiben dagegen in den Treiberverstärkern 68, 70 unabhängig von deren Eingangssignal die Schaltglieder 58, 62, 56, 60 nichtleitend.

Die beschriebene Stromspeisung des Motors 18 aus dem Gleichrichterteil 14 hat gegenüber der Verwendung herkömmlicher, netzgespeister Spaltpolmotore auch den Vorteil, daß als Motor 18 unabhängig vom Wert der Netzspannung stets derselbe Motortyp eingesetzt werden kann. In Länder mit verschiedenen Netzspannungswerten gelieferte Bildwiedergabegeräte müssen dagegen sonst mit Motoren unterschiedlicher Spannung ausgerüstet werden, und bei von üblichen Netzfrequenzen stark abweichender Frequenz, beispielsweise in Flugzeugen, muß sonst auch diese Frequenz bei der Auswahl des Motortyps berücksichtigt werden.

Patentansprüche :

1. Bildwiedergabegerät mit einer in einem Gehäuse angeordneten Bildröhre (10), einer deren Strahlablenkung steuernden Steuerschaltung (16), die ein Bildsynchronsignal (BSN) mit einer vorgegebenen, vorzugsweise annähernd einer Netzfrequenz gleichen Bildwiederholfrequenz erzeugt, und mit einem in dem Gehäuse angeordneten, von einem elektrischen Motor (18) angetriebenen Lüfter (20), d a d u r c h   g e k e n n z e i c h n e t , daß der Motor (18) ein Drehfeldmotor ist und daß sein Drehfeld synchron zu dem Bildsynchronsignal (BSN) laufend in Abhängigkeit von diesem erzeugt wird.

2. Bildwiedergabegerät nach Anspruch 1, d a d u r c h g e k e n n z e i c h n e t , daß der Motor (18) ein Asynchronmotor ist.

3. Bildwiedergabegerät nach Anspruch 2, d a d u r c h g e k e n n z e i c h n e t , daß der Motor (18) ein Phasenschieber-Asynchronmotor ist, bei dem mindestens ein Feldspulenanschluß (26) mit einem einzigen anderen Feldspulenanschluß (22) über eine die Phasenverschiebung bewirkende Impedanz, vorzugsweise einen Kondensator (34), verbunden ist.

4. Bildwiedergabegerät nach einem der vorangehenden Ansprüche, d a d u r c h   g e k e n n z e i c h n e t ,

-10-

daß der Motor (18) ein Außenläufermotor ist.

5. Bildwiedergabegerät nach einem der vorangehenden Ansprüche, d a d u r c h   g e k e n n z e i c h - n e t , daß mindestens zwei Feldspulen (28, 30) des Motors (18) impulsweise aus einer Gleichspannungsquelle (14) gespeist sind.

6. Bildwiedergabegerät nach Anspruch 5, d a d u r c h   g e k e n n z e i c h n e t , daß die Gleichspan- nungsquelle ein in der Steuerschaltung (16) vorhandener, netzgespeister Gleichrichter (14) ist.

7. Bildwiedergabegerät nach einem der vorangehenden Ansprüche, d a d u r c h   g e k e n n z e i c h - n e t , daß der Motor (18) drei Feldspulen (28, 30, 32) aufweist.

8. Bildwiedergabegerät nach einem der vorangehenden Ansprüche, d a d u r c h   g e k e n n z e i c h - n e t , daß die Feldspulen (28, 30, 32) des Motors (18) in Sternschaltung zwischen dessen Feldspulenanschlüsse (22, 24, 26) geschaltet sind.

9. Bildwiedergabegerät nach Anspruch 3 und 7 oder nach den Ansprüchen 3, 7 und 8, d a d u r c h   g e - k e n n z e i c h n e t , daß mindestens ein von dem Bildsynchronsignal (BSN) beaufschlagter Impulsgeber (42) vorgesehen ist, der jeweils beim Auftreten eines Bildsynchronimpulses im Bildsynchronsignal unverzögert einen ersten Steuerimpuls und gegenüber dem Auftreten des Bildsynchronimpulses verzögert einen zweiten Steuerimpuls erzeugt, und daß die

-11-

Stromzuführung zu zwei Feldspulenanschlüssen (22, 24) in Abhängigkeit von dem ersten bzw. zweiten Steuerimpuls erfolgt.

10. Bildwiedergabegerät nach Anspruch 9, d a d u r c h g e k e n n z e i c h n e t , daß der erste und der zweite Steuerimpuls jeweils eine der Hälfte der Folgedauer der Bildsynchronimpulse gleiche Impulsdauer aufweisen und daß der zweite Steuerimpuls zeitlich unmittelbar auf den ersten Steuerimpuls folgt.

11. Bildwiedergabegerät nach Anspruch 9 oder 10, d a - d u r c h g e k e n n z e i c h n e t , daß zur Erzeugung der Steuerimpulse ein einziger Impulsgeber (42) mit zwei antivalenten Ausgängen (44, 46) vorgesehen ist, der im Ausgangssignal des einen Ausgangs (44) den ersten Steuerimpuls und im Ausgangssignal des zweiten Ausgangs (46) den zweiten Steuerimpuls erzeugt.

12. Bildwiedergabegerät nach einem der Ansprüche 9 bis 11, d a d u r c h g e k e n n z e i c h n e t , daß der Impulsgeber (42) ein monostabiles Kippglied ist.

13. Bildwiedergabegerät nach Anspruch 3, nach Anspruch 5 oder 6, nach Anspruch 7 und nach einem der Ansprüche 9 bis 12, d a d u r c h g e k e n n z e i c h n e t , daß zwei Feldspulenanschlüsse (22, 24) des Motors (18) an jeweils einen Diagonalenanschluß (64, 66) einer von der Gleichspannungsquelle (14) gespeisten Brücke (50) angeschlossen sind, in deren vier Brückenzweigen jeweils ein

0100504

-12-

Schaltglied (56, 58, 60, 62) eingefügt ist, und daß jeweils die beiden Schaltglieder (56, 58; 60, 62), die in Reihe an der Gleichspannungsquelle (14) liegen, in Abhängigkeit von einem der Steuerimpulse derart gesteuert sind, daß ein Paar von Schaltgliedern (56, 62) leitend ist, wenn das andere Schaltgliederpaar (58, 60) nichtleitend ist, und umgekehrt.

14. Bildwiedergabegerät nach Anspruch 13, d a d u r c h g e k e n n z e i c h n e t , daß jeweils die beiden Schaltglieder (56, 58; 60, 62), die in Reihe an der Gleichspannungsquelle (14) liegen, von einem Treiberverstärker (68, 70) gebildet sind, dessen Steuereingang von einem der Steuerimpulse beaufschlagt ist und an dessen von einem Diagonalenanschluß (64, 66) gebildeten Ausgang ein Feldspulenanschluß (22, 24) des Motors (18) angeschlossen ist.

15. Bildwiedergabegerät nach Anspruch 13 oder 14, d a - d u r c h g e k e n n z e i c h n e t , daß parallel zu jedem Schaltglied (56, 58, 60, 62) eine bezüglich der Gleichspannung der Gleichspannungsquelle (14) in Sperr-Richtung gepolte Diode (72, 74, 76, 78) geschaltet ist.

16. Bildwiedergabegerät nach einem der vorangehenden Ansprüche, d a d u r c h g e k e n n z e i c h - n e t , daß die Stromzufuhr zu den Feldspulenanschlüssen (22, 24) des Motors (18) in Abhängigkeit davon abschaltbar ist, daß im Bildsynchronsignal (BSN) während einer vorgegebenen, die Folgedauer der darin im ungestörten Betrieb auftretenden Bildsynchronimpulse übersteigenden Dauer kein Bildsynchronimpuls auftritt.

17. Bildwiedergabegerät nach Anspruch 16, d a d u r c h g e k e n n z e i c h n e t , daß mit dem Bildsynchronsignal (BSN) ein von dessen Bildsynchronimpulsen wiedertriggerbares, monostabiles Kippglied (80) beaufschlagt ist, beim Fortfall von dessen Ausgangssignal die Stromzuführung unterbrochen wird.

18. Bildwiedergabegerät nach den Ansprüchen 14 und 17, d a d u r c h g e k e n n z e i c h n e t , daß die Treiberverstärker (68, 70) jeweils einen von dem Ausgangssignal des Kippgliedes (80) beaufschlagten Freigabeeingang (82, 84) aufweisen und beim Fortfall des Ausgangssignals des Kippgliedes (80) am Freigabeeingang ihren Ausgang (64, 66) von beiden Versorgungsspannungsanschlüssen (52, 54) freischalten.